# FASCICULE DE BREVET EUROPEEN

(11) **EP 0 963 135 B1**
(45) Date de publication et mention de la délivrance du brevet: **07.12.2005**
(21) Numéro de dépôt: 99401111.2
(22) Date de dépôt: 06.05.1999
(51) Int. Cl.: H04Q 11/04, H04Q 3/00, H04Q 3/66

(54) **Procédé d'activation d'un poste**
Verfahren zur Aktivierung eines Endgerätes
Method of terminal activation

(30) Priorité: 02.06.1998 FR 9806907
(43) Date de publication de la demande: 08.12.1999
(73) Titulaire: ALCATEL, 75008 Paris (FR)
(72) Inventeur: Laroque, Christioan, 92500 Rueil Malmaison (FR); Litteaut, Jacques, 78160 Marly Le Roi (FR)
(74) Mandataire: Sciaux, Edmond

(56) Documents cités:
- EP-A- 0 590 863
- WO-A-98/16072
- "PABX NETWORKS" ELECTRICAL COMMUNICATION, vol. 65, no. 1, 1 janvier 1991 (1991-01-01), pages 67-72, XP000264671
- SEVEQUE F ET AL: "ABC - A STATE-OF-THE-ART PRIVATE NETWORKING SOLUTION" ONDE ELECTRIQUE, vol. 71, no. 5, 1 septembre 1991 (1991-09-01), pages 49-53, XP000263122

## Description

La présente invention a pour objet un procédé d'activation d'un poste, notamment d'un poste téléphonique, relié à un central de télécommunications. Le but de l'invention est de permettre une télégestion généralisée d'un équipement quelconque relié à un central de télécommunications, un central téléphonique pour simplifier.

Dans le domaine des télécommunications on connaît les fonctions des centraux téléphoniques. Ceux-ci servent principalement, par des procédés de commutation, à relier entre eux différents interlocuteurs. La technique ayant évolué, les interlocuteurs ne sont plus seulement des personnes, ils peuvent être des machines. Dans ce cas, les postes téléphoniques sont des ordinateurs ou d'autres équipements échangeant entre eux des informations, notamment des données numériques, selon un protocole prédéterminé. En outre, la transmission en temps réel couramment utilisée dans le domaine téléphonique a elle-même évolué vers des communications en temps différé, avec utilisation de boîtes vocales, de boîtes de messagerie et plus généralement de systèmes de gestion de trafic. De même la communication à la demande, point à point, a par ailleurs été complété par des communications permanentes et/ou de diffusion, par exemple disponibles par le réseau Internet. Enfin sur le plan technologique, de la simple communication filaire on est passé à des transmissions par voie optique ou hertzienne, avec un partage temporel et/ou un partage fréquentiel des voies pour augmenter la capacité des canaux créés.

L'administration de tous ces équipements a conduit les opérateurs de télécommunications à distinguer dans les canaux de communication deux types d'information à transmettre. Un premier type d'information concerne les messages proprement dits c'est-à-dire les informations que des interlocuteurs veulent s'échanger. Un autre type d'information concerne la signalisation. Cette signalisation se rapporte plus directement à l'administration d'un réseau de télécommunications lui-même. En pratique les messages de signalisation servent à gérer des autocommutateurs (des centraux téléphoniques privés ou publics), à choisir les protocoles que devront respecter les messages à un moment donné pour être échangés correctement sur des voies de communication disponibles. Par exemple on connaît un canal dit T2 dans lequel un utilisateur qui obtient la disposition entière du canal dispose en fait de trente voies de communications de message de données et d'une voie spécifique de transmission de messages de signalisation.

La voie spécifique de transmission, utilisable pour les messages de signalisation a été utilisée naturellement par les différents constructeurs de matériel de télécommunication pour échanger des messages de conditionnement des équipements qui sont installés en différents endroits d'un réseau. Dans ce but un protocole nommé ABC F a été institué. Ce protocole ABC F découle de la norme Q931 de l'ISDN. Ce protocole ABC F comporte une organisation des messages de signalisation et, dans chaque message, des codes instructions. L'article de SEVEQUE F ET AL : « ABC - A STATE-OF-THE-ART PRIVATE NETWORKING SOLUTION », ONDE ELECTRIQUE , vol. 71, no.5, 1 septembre 1991 (199109-01), pages 49-53, XP000263122, décrit les fonctions de ce protocole, et en particulier un mécanisme permettant à deux autocommutateurs privés de reconnaître les services supportés par chacun d'eux. En théorie chaque constructeur doit se conformer à ce protocole. Donc chaque constructeur doit respecter la syntaxe de ce protocole dans ses messages de signalisation.

L'expérience montre cependant que la variété des constructeurs est telle, et l'évolution des besoins tellement rapide, que le respect de ces contraintes n'est pas assuré. En outre, quand bien même chaque constructeur respecterait cette norme, du fait même que les équipements sont appelés à se diversifier, et que leurs constructeurs sont d'origines diverses, il peut arriver qu'un de ces constructeurs choisisse un ordre avec une syntaxe pour correspondre à une action et qu'un autre choisisse un autre ordre mais avec une même syntaxe et pour convenir à une autre action. En pratique, il n'y a pas assez de codes d'instructions disponibles.

Un autre problème survient qui est celui de la gestion à distance des postes téléphoniques, ou plus généralement de tout appareil relié à un central distant. Ainsi on sait que dans un autocommutateur privé il est possible facilement, en respectant un protocole propre à l'autocommutateur (on parlera de protocole propriétaire), et en utilisant des circuits propres à l'autocommutateur, de commander à partir de n'importe quel poste téléphonique relié directement à cet autocommutateur, un autre poste téléphonique qui lui est aussi relié directement. Cependant, si un autre autocommutateur privé, similaire au premier, est installé en un autre endroit, il n'est actuellement pas possible de commander à partir d'un poste relié au premier autocommutateur n'importe lequel des postes reliés au deuxième autocommutateur aussi facilement qu'on commande avec lui les postes reliés au premier autocommutateur.

En effet cette commande impliquerait d'utiliser la voie spécifique de signalisation (par exemple au protocole ABC F) pour transmettre les commandes, et de tenter de se retrouver dans l'organisation inextricable qui l'accompagne. Ce phénomène est d'autant plus difficile à maîtriser que pour rejoindre cet autre autocommutateur privé à partir d'un premier autocommutateur privé, il est possible que la liaison emprunte une cascade d'autocommutateurs publics (ou privés) dont les protocoles de transmission d'un central à l'autre ne sont pas nécessairement conformes à la norme ABC F. La liaison nécessite alors des traductions. Dans bien des cas, les traducteurs perdent au passage une partie des informations de signalisation envoyées car ces informations peuvent être étrangères à celles qu'ils ont pour mission essentielle de traduire.

C'est cependant cette solution qui est retenue parce que, du fait de la norme, des circuits sont prévus dans chaque autocommutateur privé et dans chaque poste téléphonique pour interpréter des ordres reçus sur la voie spécifique de signalisation (par exemple en protocole ABC F), et les faire exécuter par le poste téléphonique auquel ils sont destinés. On est donc confronté à un équipement général, dans le monde, qui implique un fonctionnement d'un type donné, alors que l'acheminement des messages qui lui correspond devient peu à peu impossible.

L'invention a pour objet de remédier à cet inconvénient en proposant à la place un réseau virtuel des services qui est transparent vis-à-vis de tous les protocoles de transmission utilisés d'un central à un autre. Il est même transparent vis-à-vis d'un protocole de transmission utilisé pour des liaisons avec des postes reliés directement à un autocommutateur privé. Le principe de l'invention consiste à constituer des messages de service et à les envoyer par une voie de données normale. Cette voie de données peut être de tout type, du type X25, du type transmission en temps réel ou en temps différé, par voie hertzienne ou par voie optique, etc. A la réception, un circuit d'orientation reconnaît la nature de message de signalisation dans le message reçu, et l'oriente vers une action correspondante, notamment en utilisant les circuits déjà présents dans les postes.

L'invention a donc pour objet un procédé d'activation d'un poste relié à un central de télécommunication comportant une élaboration d'un ordre d'activation puis l'exécution par le poste de l'ordre élaboré, caractérisé en ce qu'il comporte les étapes suivantes :
- on teste, dans le central de départ, si l'ordre doit être exécuté sur un poste relié à un central de départ à partir duquel l'ordre est élaboré,
- s'il doit être exécuté sur un poste relié à un autre central, on établit un chemin de réseau entre le central de départ et cet autre central,
- on constitue, dans le central de départ, un message comportant une information relative à ce chemin, une information relative à l'ordre, une information de cible relative au poste téléphonique à activer, et une information d'activation relative à la nature d'ordre d'activation du message
- on transmet ce message dans le réseau à l'autre central,
- dans l'autre central, on reconstitue l'ordre à partir de ce message, et on l'exécute dans le poste à activer.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : la représentation schématique d'un réseau de télécommunications, notamment d'un réseau de communications téléphoniques utilisable pour mettre en oeuvre le procédé de l'invention ;
- Figure 2 : la représentation d'un message de signalisation constitué conformément au protocole de l'invention, et à transmettre de préférence sur une voie de données ;
- Figure 3 : la représentation schématique d'un autocommutateur privé, ou plus généralement d'un central téléphonique modifié pour mettre en oeuvre le procédé de l'invention ;
- Figure 4 : les étapes essentielles du procédé de l'invention.

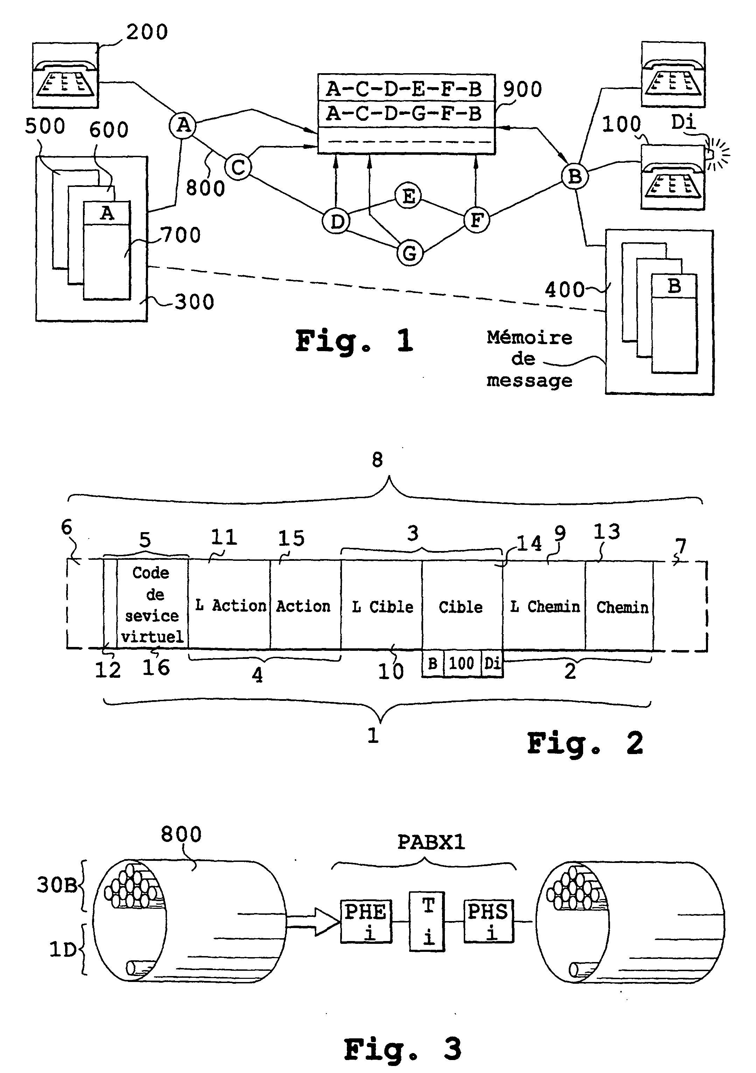

La figure 1 montre schématiquement un réseau téléphonique utilisable pour mettre en oeuvre le procédé de l'invention. Ce réseau téléphonique comporte ainsi un certain nombre de centraux téléphoniques A à G reliés entre eux et constituant un ou des cheminements de transmission d'un central A à un central B. Le problème à résoudre par l'invention est de provoquer la commande, à partir d'un central A, d'un poste 100 relié à un central B. Le poste 100 peut être un poste téléphonique. Il peut être aussi un appareil de type micro-ordinateur ou autre fonctionnant selon un système d'exploitation propre. Dans l'appareil 100, un circuit périphérique Di sera par exemple un circuit de taxation, un circuit de relevé des incidents, un circuit de connexion en mode de caractère du poste 100, un équipement de mise à jour d'une base de données disponible dans le poste 100, un circuit de gestion d'un réseau de visiophone, etc.

Pour simplifier le circuit Di pourra être une simple diode qu'on veut allumer sur le poste 100 à partir du central A, pour signaler par exemple à un interlocuteur qui dispose du poste 100 une information particulière. Le central A sera commandé par un poste 200 qui lui est relié, et qui peut être lui aussi un poste téléphonique ou un autre équipement comme le poste 100. A chaque central A à G, est associé un circuit de mémorisation, respectivement 300 et 400 pour les centraux A et B. Les circuits 300 et 400 mémorisent différentes informations. Par exemple, le circuit 300 mémorise classiquement un système d'exploitation 500 du central A, un ensemble 600 de programmes applicatifs créés par les utilisateurs du central A ou du poste 200, et un ensemble 700 de données. Dans les données de l'ensemble 700 se trouve essentiellement une identification A (ou B pour le central B) représentative du central téléphonique. Cette identification peut être codée bien entendu sur un nombre important de bits. Les centraux A à G sont reliés entre eux par des liaisons telles que 800 qui peuvent être de tout type : filaire, hertzienne, optique et supporter des protocoles quelconques : analogiques, numériques, synchronisés, asynchrones, etc.

Le réseau comporte également, d'une manière connue un organe 900 chargé d'organiser le routage des communications entre les différents centraux A à G. Ainsi, pour un cheminement du central A au central B le routeur 900 possède dans un enregistrement une information ACDEFB, ou une information ACDGFB dans un autre enregistrement, indiquant des chemins que doivent emprunter des messages pour être transmis du central A au central B. Le routeur 900 peut être un organe central. Il peut être aussi décentralisé, chacun des centraux A à G en comportant une partie.

Selon l'invention, on va utiliser une voie de données pour transmettre les messages de signalisation et non pas la voie spécifique de signalisation normalement prévue à cet effet. Une première étape de procédé de l'invention consiste alors à constituer un message d'activation du poste 100. Ce message d'activation 1 est montré sur la figure 2. Il comporte quatre parties essentielles. Une première partie 2 concerne le chemin que doit emprunter le message pour transiter du central A au central B qui est destinataire. Une seconde partie 3 concerne la cible, en clair une désignation du poste 100 dans le central B et, dans ce poste 100, l'identification d'un périphérique Di concerné par l'action. Une troisième partie 4 concerne l'action proprement dite qui doit être exécutée par le périphérique Di. Par exemple cette action sera une action de commutation d'un interrupteur visant à allumer la diode Di. Une quatrième partie 5 renseigne sur la nature d'ordre de service virtuel du message d'activation 1. C'est par exemple la présence d'une chaîne de caractères, CSV dans un exemple.

En pratique le message d'activation 1 est ensuite encapsulé, selon un protocole retenu successivement par chaque liaison 800, par un en-tête 6 et par une queue 7 pour former un message conditionné 8. Au besoin, l'information 2 de chemin sera incorporée à l'encapsulation 6 ou 7 et en fera partie. Le message 8 est effectivement transmis sur une voie de données. Son contenu d'informations utiles à l'utilisateur est limité au contenu 1 et même plus particulièrement au contenu 3 - 4 - 5. Les différentes parties 2, 3, 4 et 5 du message 1 peuvent être chacune précédée d'une information de longueur respectivement 9 à 11 indiquant, selon un mode de longueur variable, la longueur d'une information respectivement 13 à 16 représentative du chemin, de l'adresse de la cible, de l'action à entreprendre et d'un code de service virtuel respectivement.

La figure 3 montre, pour ce qui concerne l'invention, les opérations effectuées par chacun des centraux C à G, qu'ils soient privés ou publics placés sur le chemin de transmission de A à B. Ces centraux sont reliés à des canaux de transmission 800 recevant des voies de données et des voies spécifiques de signalisation. A titre d'exemple, on a symboliquement représenté un canal de type T2 évoqué ci-dessus avec trente voies de données banalisées B, et une voie spécifique de signalisation D. Dans un central se trouvent un premier circuit d'entrée PHEi (Packet Handler d'entrée) destiné à traiter les en-tête 6 et queue 7 du message 8, notamment pour vérifier l'intégrité du message 1 transmis. Les centraux comportent également des circuits de traitement Ti des messages qui leurs sont destinés. Lorsque les centraux ne servent que de relais de transmission, ils transmettent les messages reçus à des circuits de sortie PHSi ayant une fonction inverse, de ce point de vue, de celle des circuits d'entrée PHEi et consistant notamment à rétablir, ou à modifier si un prochain canal de transmission possède un protocole différent, les en-tête 6 et queue 7 du message. Un circuit PHSi transmet donc un message 8 plus loin lorsque le circuit Ti auquel il est rattaché n'en était pas le destinataire. La fonction essentielle des centraux interposés est de transmettre intégralement le message 1 sans l'altérer d'aucune façon.

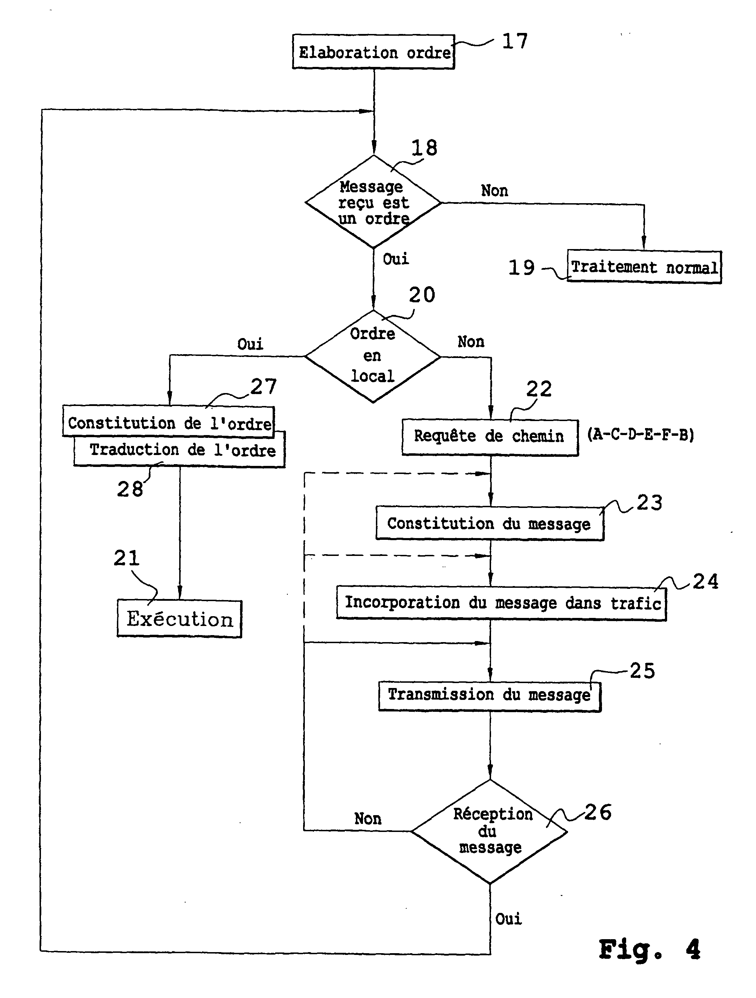

Dans l'invention on va modifier, dans chaque central qui doit être muni des moyens de mettre en oeuvre le procédé de l'invention, le fonctionnement des circuits PHE et PHS. Dans la pratique, il n'y aura aucun équipement nouveau à installer. On procédera seulement de préférence à des modifications du système d'exploitation 500 ou des programmes d'application 600 attachés à ces centraux. Le contenu des programmes à exécuter dans ce but avec ces centraux est montré sur la figure 4.

Un ordre 17 est aussi élaboré par un opérateur par exemple à partir du poste 200. Dans un exemple cet ordre a pour but d'allumer (c'est l'action) une diode Di du poste 100 rattaché au central B (c'est la cible). Cet ordre comprend donc essentiellement comme argument les parties 3, 4 et 5 (ou des informations correspondantes pour cette dernière partie). De préférence, dans un outil de programmation, un langage de programmation utilisé par l'opérateur pour composer l'ordre 17, l'ajout de la partie 5 sera même automatique. De cette façon, pour cette opération, la programmation sera sans contrainte, transparente. Du seul fait qu'il aura désigné une action et une cible, la totalité de l'ordre sera composée par ajout automatique de la partie 5. Après qu'un tel ordre ait été élaboré au cours de la phase 17, cet ordre est transmis aux circuits PHE - PHS du central A. Le programme 600 (ou 700) du central A fait alors effectuer par les circuits PHE - PHS un premier test 18 pour savoir si le message qu'il reçoit du poste 200 est un ordre ou non. Le test 18 consiste à aller examiner la zone 16 du message 1 constituée, au moins en partie, au cours de l'étape 17. Par exemple, si un code d'ordre CSV est présent dans le message 1, le test 18 en déduira qu'il s'agit d'un message d'ordre et lui fera subir un traitement correspondant. Sinon le circuit PHE - PHS transmettra normalement au cours d'une étape 19 le message d'une manière habituelle comme s'il s'agissait d'un message d'information.

La présence du code CSV en zone 16 peut par ailleurs être remplacée par une architecture particulière des informations 14 et 15 ou par tout autre moyen. La présence du code virtuel CSV, ajouté au message 1 est cependant une méthode préférée.

Au cours d'un test 20 succédant au test 18, le central A cherche à savoir si l'ordre doit être exécuté en local ou non. Dans ce but, il regarde quelle est la cible concernée par l'ordre. Si la cible est le poste 200 relié au central A, l'exécution 21 de l'ordre sera immédiate, l'action 15 ayant été programmé par l'opérateur du poste 200 (ou autre) dans un langage compréhensible par le circuit PHE et par des circuits périphériques du central A.

A l'opposé, si la cible est distante, s'il s'agit du poste 100 relié au central B, alors le circuit PHE selon l'invention effectuera une requête 22 au routeur 900 pour connaître le chemin par lequel le message de signalisation correspondant à l'ordre doit être acheminé. Le circuit 900 communique alors au circuit PHE l'indication ACDEFB (ou un autre chemin) préféré pour acheminer le message. Au cours d'une opération 23 le circuit PHE constitue alors définitivement le message 1 en concaténant les informations 9 à 16. Puis le circuit PHE - PHS va incorporer le message 1 dans le trafic au cours d'une étape 23, comme il le fait déjà pour les messages d'informations pour lesquelles le central A ne sert que de relais. Il constitue notamment le message 8 avec les en-tête 6 et queue 7. Ce message 8 va donc être transmis au cours d'une étape 25 au premier central connecté au central A : le central C.

Le conditionnement du message 1 peut comporter notamment l'indication dans l'en-tête 6 ou la queue 7 une réitération du chemin ACDEFB connu à l'étape 22. Au besoin l'information 2 fait partie de l'information 6 ou 7. Dans certains cas les informations 6 ou 7 peuvent même être envoyés par la voie de signalisation, alors que le reste du message 1, selon l'invention, sera envoyée par une voie de données. Ce type de conditionnement est classique et l'intervention du routeur 900 pour délivrer le chemin est aussi connue.

Au cours d'un test 26, dans le central C on cherche ainsi à savoir si le message 8 reçu, par un canal de données pour partie, est destiné à un périphérique relié à ce central C ou non. Si ce n'est pas le cas le message est transmis par une opération 25 à un central suivant. Au besoin, cette transmission plus loin s'accomplit par un reconditionnement 23 et/ou une réincorporation au trafic 24 exécutée par le central C. Au cours du test 26, les circuits PHE et PHS des centraux C, D, E, F rencontrés ne font que tester, et ainsi éventuellement modifier s'il y a changement de protocole, les en-tête 6 et queue 7. Lors de ce test 26 ces centraux interposés peuvent déterminer s'ils sont au non destinataires du message 1. Ainsi de suite le message 8 voyage du central A au central B.

Lorsqu'il arrive dans le central B, le circuit PHE du central B reconnaît qu'il est destinataire puisque dans l'en-tête 6 ou la queue 7 il reconnaît son identification. Il peut également la reconnaître dans l'information 14 de cible s'il est muni des moyens de l'invention. Il décrypte alors la partie 5 du message 1 au cours de l'étape 18 pour savoir si le message 18 est un ordre. Comme précédemment, si ce n'est pas le cas, s'il s'agit d'une information à traiter d'une autre manière, il s'ensuit un traitement connu 19.

Par contre si une information CSV a été reconnue en zone 16, l'ordre devra être exécuté, mais il devra être exécuté en local cette fois au cours de l'opération 21, dans le central B puisqu'il concerne le central B, le poste 100, et le périphérique Di auquel il a abouti.

Le circuit PHE comporte, d'une manière connue, des instructions 27 de constitution physique d'un ordre à partir du message d'activation reçu. En effet selon la norme ABC F précédente, un ordre envoyé d'une manière condensée dans une voie de signalisation d'un canal 800 devait être transformé en une succession d'opérations, notamment par le système d'exploitation 500, pour concerner l'opération à mettre en oeuvre réellement sur le périphérique Di. Donc de tels moyens 27 existent déjà. Dans l'invention on les utilise.

Dans l'invention en outre, compte tenu que l'on ne souscrit plus à la norme ABC F pour envoyer les messages, il est possible qu'un système d'exploitation 500, ou des programmes d'application 600 du central B, soient différents de ceux du central A. Dans ce cas là, ils devront comporter en plus, dans une application supplémentaire selon l'invention, des moyens 28 pour traduire l'ordre constitué dans un langage qui leur est compréhensible. Dans ce dernier cas les moyens 27 et 28 formeront généralement un seul programme.

En résumé les circuits PH (PHE et PHS) de l'invention effectuent la concaténation des informations de chemins, de cible et d'action avec une information CSV spécifique de code de service virtuel. Ils seront capables de tester la présence de cette information CSV pour faire exécuter ou non l'information transmise comme un ordre et, le cas échéant, ils comportent des fonctions supplémentaires pour effectuer une traduction de l'ordre dans un langage compréhensible par les organes auxquels ils sont rattachés.

Dans ce but, le message 1 pourra comporter en plus une information supplémentaire, non représentée sur la figure 2, représentative de la version de langage utilisée dans le central A pour élaborer l'ordre. D'une manière bien compréhensible, avec une compatibilité ascendante, le central B, s'il est de conception plus récente que le central A sera toujours capable de mettre en oeuvre des ordres émanant du central A. Il comportera ainsi autant de fonctions de traductions qu'il y a de versions possibles.

A titre de perfectionnement, le message 1 pourra également comporter une information de mot de passe propre au central B, voire au poste 100 ou au périphérique Di, pour empêcher quiconque de modifier le fonctionnement du poste 100 s'il ne connaît pas ce mot de passe. Ce mot de passe sera donc incorporé, à l'endroit du central A, dans le message 1 et sera reçu et vérifié par les circuits PHE - PHS du central B qui effectueront en plus la vérification correspondante.

Enfin, il est possible avec le procédé de l'invention d'effectuer une diffusion d'un même ordre à tous les postes d'un réseau. Dans ce cas, il peut suffire par exemple de laisser dans l'information cible, dans l'adresse, les zones affectées à B, et/ou à 100 et/ou à Di en blanc pour désigner tout ou partie de ces équipements.

On notera enfin que les positions respectives des tests 18 et 20 peuvent être inversées, avec déplacement correspondant des actions 21 et 22.

## Revendications

1. Procédé d'activation d'un poste relié à un central de télécommunications comportant une élaboration (17) d'un ordre d'activation puis l'exécution (21) par le poste de l'ordre élaboré, **caractérisé en ce qu'**il comporte les étapes suivantes:
- on teste (18), dans le central de départ, si l'ordre doit être exécuté sur un poste relié à un central de départ à partir duquel l'ordre est élaboré,
- s'il doit être exécuté sur un poste relié à un autre central, on établit (22) un chemin de réseau entre le central de départ et cet autre central,
- on constitue, dans le central de départ, un message d'activation (8) comportant une information (2) relative à ce chemin, un information (4) relative à l'ordre, une information (3) de cible relative au poste téléphonique à activer, et une information (5) d'activation relative à la nature d'ordre d'activation du message
- on transmet (25) ce message d'activation dans le réseau à l'autre central (B),
- dans l'autre central, on reconstitue (27) l'ordre à partir de ce message d'activation, et on l'exécute dans le poste à activer.

2. Procédé selon la revendication 1, **caractérisé en ce que** pour établir l'information relative au chemin, on prélève cette information dans une mémoire (900) de routage.

3. Procédé selon l'une de revendications 1 à 2, **caractérisé en ce que** pour constituer l'information relative à l'ordre, on la traduit (28) dans un langage spécifique.

4. Procédé selon l'une de revendications 1 à 3, **caractérisé en ce que** pour constituer l'information de cible, on concatène une information d'adresse (B) de central téléphonique, une information d'adresse (100) de poste de télécommunications, et une adresse (Di) d'un périphérique attaché à ce poste de télécommunications.

5. Procédé selon la revendication 4, **caractérisé en ce que** pour constituer l'information cible on concatène l'information de poste de télécommunications et/ou de périphérique attaché avec une information de diffusion relative aux centraux de télécommunications et ou relative aux postes de télécommunications.

6. Procédé selon l'une de revendications 1 à 5, **caractérisé en ce que** pour constituer l'information relative à la nature d'ordre d'activation du message, on incorpore dans le message une chaîne de caractères (CSV) prédéterminée.

7. Procédé selon l'une de revendications 1 à 6, **caractérisé en ce qu'**on ajoute dans le message d'activation un mot de passe, on vérifie ce mot de passe dans l'autre central, et on active le poste désigné si la vérification est correcte.

## Patentansprüche

1. Verfahren zur Aktivierung eines mit einer Telekommunikations-Vermittlungsanlage verbundenen Endgerätes, umfassend eine Erstellung (17) eines Aktivierungsbefehls und die anschließende Ausführung (21) des erstellten Befehls durch das Endgerät, **dadurch gekennzeichnet, dass** es die folgenden Schritte umfasst:
- man testet (18) in der Ausgangs-Vermittlungsanlage, ob der Befehl auf einem Endgerät ausgeführt werden muss, welches mit einer Ausgangs-Vermittlungsanlage verbunden ist, von der aus der Befehl erstellt wird:
- wenn er auf einem mit einer anderen Vermittlungsanlage verbundenen Endgerät ausgeführt werden muss, legt man einen Weg durch das Netzwerk zwischen der Ausgangs-Vermittlungsanlage und dieser anderen Vermittlungsanlage fest (22);
- man bildet in der Ausgangs-Vermittlungsanlage eine Aktivierungsnachricht, welche eine Information (2) über diesen Weg umfasst, eine Information (4) über den Befehl, eine Zielinformation (3) über das zu aktivierende Telefon-Endgerät und eine Aktivierungsinformation (5) über die Art des Aktivierungsbefehls der Nachricht;
- man überträgt (25) diese Nachricht im Netzwerk an die andere Vermittlungsanlage (B);
- in der anderen Vermittlungsanlage stellt man den Befehl ausgehend von dieser Nachricht wieder her (27) und führt ihn in dem zu aktivierenden Endgerät aus.

2. Verfahren nach Anspruch 1, **dadurch gekennzeichnet, dass** man zur Erstellung der Information über den Weg diese Information aus einem Leitweglenkungsspeicher (900) entnimmt.

3. Verfahren nach einem der Ansprüche 1 bis 2, **dadurch gekennzeichnet, dass** man zur Bildung der Information über den Befehl diesen in eine bestimmte Sprache übersetzt (28).

4. Verfahren nach einem der Ansprüche 1 bis 3, **dadurch gekennzeichnet, dass** man zur Bildung der Zielinformation eine Adresseninformation (B) der Telefonvermittlungsanlage, eine Adresseninformation (100) des Telekommunikations-Endgerätes und eine Adresse (Di) einer mit diesem Telekommunikations-Endgerät verbundenen Peripherieeinrichtung verkettet.

5. Verfahren nach Anspruch 4, **dadurch gekennzeichnet, dass** man zur Bildung der Zielinformation die Information des Telekommunikations-Endgerätes und/oder der verbundenen Peripherieeinrichtung mit einer Rundsendeinformation verkettet, die sich auf die Telekommunikations-Vermittlungsanlagen und auf die Telekommunikations-Endgeräte bezieht.

6. Verfahren nach einem der Ansprüche 1 bis 5, **dadurch gekennzeichnet, dass** man zur Bildung der Information über die Art des Aktivierungsbefehls der Nachricht in die Nachricht eine zuvor festgelegte Zeichenkette (CSV) einfügt.

7. Verfahren nach einem der Ansprüche 1 bis 6, **dadurch gekennzeichnet, dass** man in der Aktivierungsnachricht ein Passwort hinzufügt, dass man dieses Passwort in der anderen Vermittlungsanlage überprüft und dass man das bezeichnete Endgerät aktiviert, wenn die Überprüfung korrekt ist.

## Claims

1. Method of activating a station connected to a telecommunication central office including generation (17) of an activation instruction followed by execution (21) of the instruction by the station, **characterized in that** it includes the following steps:
- testing (18) at the originating central office whether the instruction must be executed at a station connected to an originating central office at which the instruction is generated,
- if it must be executed at a station connected to another central office, establishing (22) a network path between the originating central office and said other central office,
- constituting at the originating central office an activation message (8) including information (2) relating to said path, information (4) relating to the instruction, target information (3) relating to the telephone to be activated and activation information (5) relating to the nature of the activation instruction in the message,
- transmitting (25) said activation message in the network to the other central office (B), and
- in the other central office, reconstituting (27) the instruction from said activation message and executing it in the station to be activated.

2. Method according to claim 1 **characterized in that** to establish the information relating to the path said information is taken from a routing memory (900).

3. Method according to either claim 1 or 2 **characterized in that** to constitute the information relating to the instruction it is translated (28) into a specific language.

4. Method according to any of claims 1 to 3 **characterized in that** to constitute the target information, information on the address (B) of the telephone central office, information on the address (100) of the telecommunication station and an address (Di) of a peripheral attached to said telecommunication station are concatenated.

5. Method according to claim 4 **characterized in that** to constitute the target information the telecommunication station information and/or peripheral information is concatenated with broadcast information relating to the telecommunication central offices or the telecommunication stations.

6. Method according to any of claims 1 to 5 **characterized in that** to constitute the information relating to the nature of the activation instruction in the message a predetermined character string (VSC) is incorporated in said message.

7. Method according to any of claims 1 to 6 **characterized in that** a password is added to the activation message, said password is verified in the other central office and the designated station is activated if the result of the verification is correct.
